# EUROPÄISCHE PATENTSCHRIFT

(11) **EP 3 821 150 B1**
(45) Veröffentlichungstag und Bekanntmachung des Hinweises auf die Patenterteilung: **10.08.2022**
(21) Anmeldenummer: 19735524.1
(22) Anmeldetag: 27.06.2019
(51) Int. Cl.: F16C 39/04, F16C 17/02, F16C 17/24

(54) **GLEITLAGER**
SLIDING BEARING
PALIER LISSE

(30) Priorität: 12.07.2018 DE 102018211620
(43) Veröffentlichungstag der Anmeldung: 19.05.2021
(73) Patentinhaber: SKF Marine GmbH, 20457 Hamburg (DE)
(72) Erfinder: HAMMERSCHMIDT, Detlef, 18119 Rostock (DE)
(74) Vertreter: Kuhstrebe, Jochen
(86) Internationale Anmeldenummer: PCT/EP2019/067210
(87) Internationale Veröffentlichungsnummer: WO 2020/011554

(56) Entgegenhaltungen:
- WO-A1-2010/103100
- DE-A1- 2 443 204
- DE-C- 331 734
- GB-A- 1 161 895
- JP-A- 2012 062 872
- US-A1- 2006 165 326

## Beschreibung

Die Erfindung betrifft ein Gleitlager, insbesondere zur Lagerung einer zylindrischen Welle, mit einem im Wesentlichen hohlzylindrischen Grundkörper mit einer Längsmittelachse, wobei die Welle radial spielbehaftet in einer Lagerbohrung des Grundkörpers aufgenommen ist.

In der Technik finden mit Wasser oder mit anderen Fluiden arbeitende hydrostatische oder hydrodynamische Gleitlager zur wartungsarmen und aufgrund eines sich ausbildenden Fluidfilms praktisch reibungsfreien Lagerung von Maschinenteilen verbreitet Anwendung.

Aus der DD 285 157 A5 ist ein Gummiwellenlager, für die Lagerung von Wellen, insbesondere auf Schiffen und im Pumpenbau, bekannt. Die Anzahl von Schmier- und Spülnuten soll auf ein Minimum reduziert werden, wobei die Anordnung der Nuten außerhalb des zur Ausbildung eines maximalen Druckberges erforderlichen Bereiches vorgesehen ist. Eine definierte Zufuhr eines Schmier- oder Spülmittels in die Lagerhülse des Gleitlagers ist nicht vorgesehen. Beim Anlauf des vorbekannten Gleitlagers kann es ferner zu einem erhöhten Verschleiß kommen. Weiterer Stand der Technik ist in der JP 2012 062872 A, der WO 2010/103100 A1, der DE 24 43 20 A1, der GB 1 161 895 A, der US 2006/165326 A1 und in der DE 331 734 C gezeigt.

Aufgabe der Erfindung ist es, ein möglichst verschleißreduziertes Gleitlager anzugeben, das mit einem niedrigviskosem Fluid wie zum Beispiel Wasser betreibbar und im Wesentlichen nicht hydrodynamisch funktioniert.

Die eingangs genannte Aufgabe wird gelöst durch ein Gleitlager mit den kennzeichnenden Merkmalen des Patentanspruchs 1, wonach im Bereich einer Lastzone der Lagerbohrung mindestens eine kleinflächige Längsvertiefung angeordnet ist und die mindestens eine Längsvertiefung mittels einer externen Fluidversorgung mit einem unter einem Druck stehenden Fluid zur Verschleißminderung des Gleitlagers beaufschlagbar ist. Hierdurch vereint das erfindungsgemäße (Hybrid- )Gleitlager die Vorteile eines hydrostatischen Gleitlagers mit denen eines hydrodynamischen Gleitlagers. Hydrodynamische und auch hydrostatische Gleitlager sind im Normalbetrieb verschleißfrei und reibungsarm. Das erfindungsgemäße Gleitlager erreicht diese vorteilhaften Eigenschaften auch dann, wenn es mit einem niedrigviskosem Fluid wie zum Beispiel Wasser betrieben wird und im Wesentlichen nicht hydrodynamisch funktioniert. Der bei konventionellen rein hydrostatischen Gleitlagern ansonsten notwendige hohe bauliche Aufwand in Form mindestens einer Hochdruckpumpe für das Fluid kann reduziert werden, da nur eine Mitteldruckpumpe benötigt wird. Bei dem erfindungsgemäßen Gleitlager ist das Verschleißverhalten zudem unabhängig von der Relativgeschwindigkeit zwischen der gelagerten Welle und einer Lagerbohrung eines Grundkörpers des Gleitlagers. Bei marinen Anwendungen lässt sich eine Gleitlagerbelastung bzw. Flächenlast von bis zu 0,6 MPa realisieren, die sich in der Größenordnung einer maximal erreichbaren Belastbarkeit einer Ölschmierung bewegt. Mit einer Ölschmierung ist im Ergebnis nur eine geringfügig höhere Gleitlagerbelastung von bis zu 0,8 MPa aufnehmbar. Die Fläche der Längsvertiefungen in der Lastzone entspricht hierbei vorzugsweise weniger als 50% der Lastzone, höchst vorzugsweise weniger als 30% der Lastzone, beziehungsweise weniger als 10% der gesamten Innenoberfläche. Weiterhin ist vorzugsweise ein Länge zu Breite- Verhältnis der kleinflächigen Längsvertiefungen von mindestens 10:1 gegeben. Im Verhältnis zur gesamten Innenoberfläche der Lagerbohrung sind die Längsvertiefungen somit kleinflächig.

Vorzugsweise ist die mindestens eine Längsvertiefung mittels mindestens eines Fluidkanals mit der Fluidversorgung verbunden. Infolgedessen kann das Fluid unmittelbar der mindestens einen Längsvertiefung zugeführt werden.

Ein Druck des Fluids im Bereich einer Eintrittsöffnung der mindestens einen Längsvertiefung mittels der Fluidversorgung ist so eingestellt, dass eine auf das Gleitlager einwirkenden Gleitlagerbelastung höchstens teilweise kompensiert ist. Hierdurch stellt das Gleitlager eine Mischform zwischen einem hydrostatischen und einem hydrodynamischen Gleitlager dar. Der Druck im Bereich der Eintrittsöffnung ist so bemessen, dass die Gleitlagerbelastung zu etwa 40% kompensiert ist. Infolgedessen ergibt sich eine Reduzierung des Verschleißes um etwa 90%.

Die mindestens eine Längsvertiefung ist radial einwärts offen. Hierdurch ist ein definierter Druckaufbau des Fluids innerhalb der wenigstens einen Längsvertiefung möglich. Die wenigstens eine Längsvertiefung ist zum Erreichen dieses Zwecks zumindest bereichsweise beidseits axial geschlossen ausgeführt.

Die mindestens eine Längsvertiefung eine langgestreckte und schmale sowie näherungsweise ovale Umfangskontur auf. Hierdurch verfügt die wenigstens eine Längsvertiefung im Unterschied zu großflächigen hydrostatischen Schmiertaschen über eine schmale und längliche Geometrie. Die schmale Kontur verläuft in axialer Richtung, um damit den hydrodynamischen Effekt möglichst wenig zu stören. Darüber hinaus ist hierdurch eine einfache Fertigung der mindestens einen Längsvertiefung zum Beispiel mittels üblicher, spangebender Verfahren, insbesondere Fräsen, möglich.

Vorzugsweise besteht zwischen der Längsmittelachse des Grundkörpers und einer Längsmittelachse der Welle ein Radialversatz. Hierdurch wird der Welle ein hinreichend großes Radialspiel innerhalb des Grundkörpers verliehen.

Bei einer günstigen Ausgestaltung ist der Grundkörper mit einem Kunststoffmaterial und die Welle ist mit einem metallischen Material gebildet. Infolgedessen wird ein erhöhter Verschleiß (so genanntes "Fressen") im Fall eines direkten, fluidfreien mechanischen Kontaktes ("Trockenlaufen") zwischen der Welle und der Lagerbohrung vermieden. Als Kunststoffmaterial kommt vor allem thermoplastisches Polyurethan in Betracht. Umfangreiche praktische Versuche mit verschiedenen Kunststoffen haben darüber hinaus ergeben, dass der Auswahl des Kunststoffes eine entscheidende Bedeutung zukommt. Der gewünschte Effekt einer Verschleißreduzierung lässt sich demzufolge nur mit besonders geeigneten Kunststoffen als Lagerwerkstoff erzielen.

Nach Maßgabe einer technisch vorteilhaften Weiterbildung ist das Fluid ein flüssiges Medium mit einer geringen Viskosität, insbesondere Wasser. Hierdurch ist ein problemloser Einsatz des erfindungsgemäßen Gleitlagers für marine Anwendungen und bevorzugt im Schiffbau gegeben.

Bei einer weiteren Ausgestaltung ist der Grundkörper in einem Lagergehäuse angeordnet, das insbesondere mit einem metallischen Material gebildet ist. Infolgedessen ist eine konstruktiv einfachere Integration des Gleitlagers in ein vorgegebenes Maschinenteil gewährleistet, in dem mittels des Gleitlagers eine Welle gelagert werden soll.

Im Folgenden wird ein bevorzugtes Ausführungsbeispiel der Erfindung anhand von schematischen Figuren näher erläutert.

Es zeigen
- Figur 1: einen Längsschnitt eines erfindungsgemäßen Gleitlagers, und
- Figur 2: eine schematische perspektivische Teildarstellung eines Grundkörpers des Gleitlagers von Fig. 1.

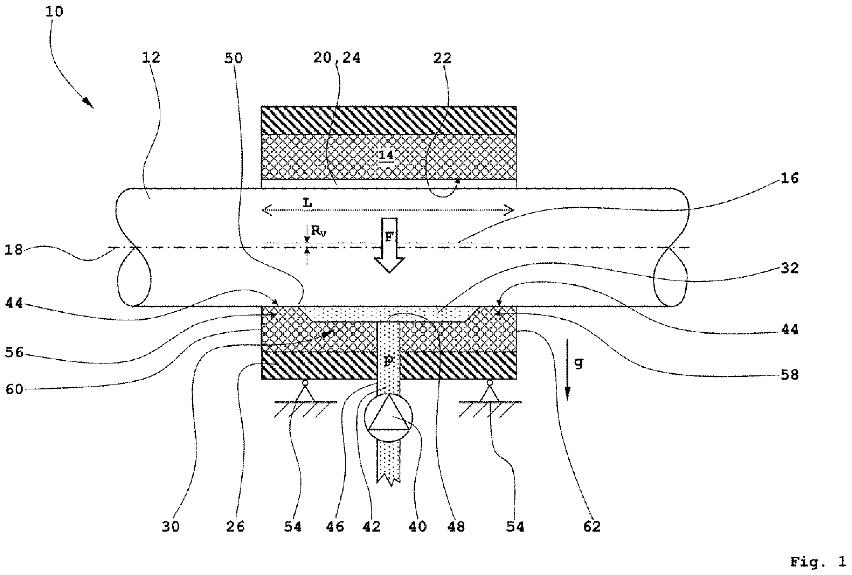

Die Figur 1 illustriert einen Längsschnitt eines erfindungsgemäßen Gleitlagers. Ein Gleitlager 10 zur drehbaren Lagerung einer zylindrischen Welle 12 verfügt über einen im Wesentlichen hohlzylindrischen Grundkörper 14 mit einer Längsmittelachse 16. Bei stillstehender Welle 12 existiert ein Radialversatz R_{V} zwischen den beiden Längsmittelachsen 16, 18, so dass die Welle 12 radial spielbehaftet bzw. exzentrisch in einer Lagerbohrung 20 des Grundkörpers 14 des Gleitlagers 10 drehbar liegt. Bei nicht drehender Welle 12 besteht demzufolge zwischen der Welle 12 und einer zylindrischen Lagerbohrungsinnenfläche 22 ein in Relation zum Richtungsvektor der Erdbeschleunigung g obenliegender mondsichelartiger Radialspalt 24. Der hohlzylindrische Grundkörper 14 des Gleitlagers 10 ist hier lediglich exemplarisch in einem massiven Lagergehäuse 26 aufgenommen, bei dem es sich beispielsweise um ein Stehlagergehäuse oder dergleichen handeln kann. Auf das Gleitlager 12 wirkt die symbolisch dargestellte Gleitlagerbelastung F als eine sogenannte Flächenlast ein. Das Gleitlager 10 ist bevorzugt für Wellen 12 mit einem großen Durchmesser vorgesehen.

Im Bereich einer mechanischen (Haupt-)Lastzone 30 bzw. fluidischen Auftriebszone - in der die Welle 12 zumindest bereichsweise auf der Innenbohrung 20 aufliegt - ist wenigstens eine erfindungsgemäße kleinflächige Längsvertiefung 32 vorgesehen. Die mindestens eine Längsvertiefung 32 ist mittels einer externen Fluidversorgung 40 mit einem unter einem Druck p stehenden Fluid 42 zum Schmieren des Gleitlagers 10 beaufschlagbar. Durch die wenigstens eine Längsvertiefung 32 erfolgt zumindest eine Verteilung des Fluids 42 im Bereich der untenliegenden (Haupt-)Lastzone 30 des Gleitlagers 10. Um einen Druckaufbau zu ermöglichen, ist die wenigstens eine Längsvertiefung 32 radial einwärts offen und beidseits axial abgeschlossen ausgebildet. Die wenigstens eine kleinflächige Längsvertiefung 32 kann zum Beispiel eine näherungsweise nutartige, im Wesentlichen leicht ovale bzw. angenähert rechteckige Umfangskontur 50 aufweisen. Bei rotierender Welle 12 und der Beaufschlagung der wenigstens einen Längsvertiefung 32 mit dem unter dem Druck p stehenden Fluid 42 mit Hilfe der externen Fluidversorgung 40 ist der Kontaktbereich 30 optimal geschmiert und gekühlt.

Das Fluid 42 kann eine niedrige Viskosität aufweisen, sodass zum Beispiel Wasser Verwendung finden kann. Die Lastzone 30 ist bei stillstehender Welle 12 und fehlendem Fluid 42 im Wesentlichen deckungsgleich mit einer zylindrisch gekrümmten Anlagefläche 44 bzw. einer direkten Kontakt- oder Berührungszone zwischen der Welle 12 und der Lagerbohrungsinnenfläche 20. Vor dem Eintritt in die Fluidversorgung 40 ist das Fluid 42 praktisch drucklos.

Die mindestens eine Längsvertiefung 32 ist mittels eines rohrartigen Fluidkanals 46 mit der Fluidversorgung 40 hydraulisch verbunden. Der Fluidkanal 46 ist bevorzugt entgegengesetzt zur Gleitlagerbelastung F an dem Grundkörper 14 positioniert. Ein Druck p des Fluids 42 ist im Bereich einer Eintrittsöffnung 48 in die mindestens eine Längsvertiefung 32 mittels der externen Fluidversorgung 40 so eingestellt, dass eine auf die Welle 12 bzw. das Gleitlager 10 einwirkende Gleitlagerbelastung F bzw. Flächenlast höchstens teilweise kompensiert ist. Die Gleitlagerbelastung F wirkt hierbei vorrangig im Bereich der Lastzone 30 innerhalb der Lagerbohrung 20. Vorzugsweise ist der Druck p insbesondere im Bereich der Eintrittsöffnung 48 mittels der externen Fluidversorgung 40 so eingestellt, dass die Gleitlagerbelastung F zu ungefähr 40% kompensiert ist und sich eine Reduzierung des Lagerverschleißes von bis zu 90% einstellt. Die Höhe des Drucks p befindet sich im Ergebnis auf einem Niveau, welches zwischen dem einer hydrodynamischen und einer hydrostatischen Fluidversorgung des Gleitlagers 10 liegt.

Aufgrund des Drucks p des Fluids 42 innerhalb der wenigstens einen kleinflächigen Längsvertiefung 32 sowie des Fluids 42 in unmittelbarer Nähe zur Längsvertiefung 32 kommt es zu einer höchstens teilweisen Kompensation der Gleitlagerlast F. Infolgedessen ändert sich das Verschleißverhalten zwischen den beteiligten Gleitpartnern in Form der Lagerbohrung 20 des Grundkörpers 14 des Gleitlagers 10 und der Welle 12 derart, dass es zu einer signifikanten Verschleißreduzierung kommt.

Die wenigstens eine Längsvertiefung 32 im Bereich der Lastzone 30 befindet sich räumlich im Wesentlichen gegenüberliegend zur mechanischen Gleitlagerlast F in der Lagerbohrung 20 des Grundkörpers 14 des Gleitlagers 10.

Die mindestens eine Längsvertiefung 32 erstreckt sich weiterhin nicht über eine volle axiale Länge L des Grundkörpers 14. Vielmehr bleiben ein erster und zweiter Ringsteg 56, 58 an einem ersten und einem zweiten axialen Ende 60, 62 des Grundkörpers 14 frei von der wenigstens einen Längsvertiefung 32.

Der hohlzylindrische Grundkörper 14 des Gleitlagers 10 ist vorzugsweise mit einem geeigneten, möglichst reibungsarmen und mediumbeständigen jedoch hinreichend mechanisch belastbaren Kunststoffmaterial gebildet. Die Welle 12 und das Lagergehäuse 26 des Gleitlagers 10 sind hingegen bevorzugterweise mit einem metallischen Werkstoff gefertigt.

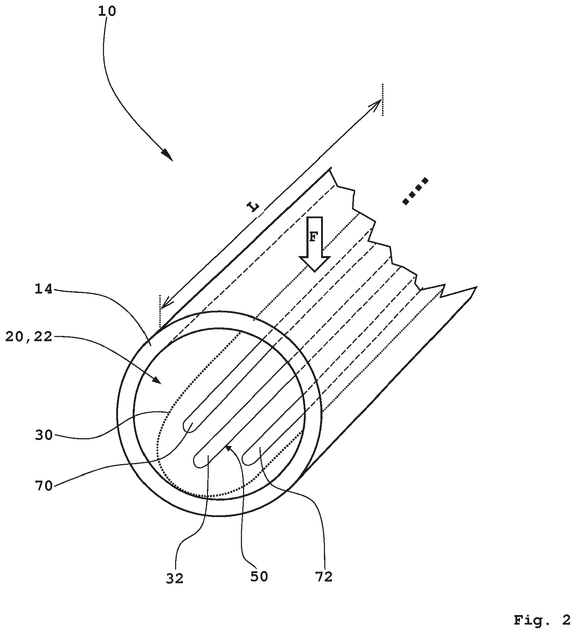

Die Figur 2 illustriert eine schematische perspektivische Teildarstellung eines Grundkörpers des Gleitlagers von Fig. 1. Der Grundkörper 14 des Gleitlagers 10 verfügt über eine im Wesentlichen hohlzylindrische Formgebung mit der axialen Länge L. In die Lagerbohrungsinnenfläche 22 der Lagerbohrung 20 des Grundkörpers 14 ist die Längsvertiefung 32 mit ihrer hier lediglich exemplarisch näherungsweise rechteckigen bzw. leicht ovalen Umfangskontur 50 eingelassen. Die Längsvertiefung 32 ist vorzugsweise gegenüberliegend zur angreifenden Gleitlagerbelastung F in der Lagerbohrung 20 angeordnet.

Beidseits sowie parallel gleichmäßig und geringfügig beabstandet zu der Längsvertiefung 32 verlaufen hier lediglich beispielhaft zwei weitere, bevorzugt konstruktiv identisch zur mittleren Längsvertiefung 32 ausgebildete, kleinflächige Längsvertiefungen 70, 72 im Bereich der (Haupt-)Lastzone 30 des Gleitlagers 10 zur großräumigeren Verteilung des Fluids unterhalb der hier nicht eingezeichneten Welle. Die drei Längsvertiefungen 32, 70, 72 erstrecken sich bevorzugt über einen verhältnismäßig kleinen Umfangswinkel der Lagerbohrungsinnenfläche 22 von höchstens 120°. In diesem Bereich des Umfangwinkels der Lagerbohrungsinnenfläche 22, in welchem die drei Längsvertiefungen 32, 70, 72 angeordnet sind, nehmen diese eine Fläche von maximal der Hälfte, vorzugsweise kleiner 30 %, der der Lagerbohrungsinnenfläche 22 ein. An der gesamt Lagerbohrungsinnenfläche 22 somit weniger als 10 %.

Eine Anzahl, räumliche Geometrie, axiale Länge und/oder umfangsseitige Lage der Längsvertiefungen 32, 70, 72 in der Lagerbohrung 20 des Grundkörpers 14 kann gegebenenfalls in Abhängigkeit von den jeweiligen Anforderungen einer Zielapplikation für das Gleitlager 10 von der hier lediglich beispielhaft gezeigten Positionierung abweichen.

Die Erfindung betrifft ein Gleitlager, insbesondere zur Lagerung einer zylindrischen Welle, mit einem im Wesentlichen hohlzylindrischen Grundkörper mit einer Längsmittelachse, wobei die Welle radial spielbehaftet in einer Lagerbohrung des Grundkörpers aufgenommen ist. Erfindungsgemäß ist vorgesehen, dass im Bereich einer Lastzone der Lagerbohrung mindestens eine kleinflächige Längsvertiefung angeordnet ist und die mindestens eine Längsvertiefung mittels einer externen Fluidversorgung mit einem unter einem Druck stehenden Fluid zur Verschleißminderung des Gleitlagers beaufschlagbar ist. Das Gleitlager weist einen um bis zu 90% reduzierten Verschleiß auf.

### Bezugszeichenliste

- 10: Gleitlager
- 12: zylindrische Welle
- 14: hohlzylindrischer Grundkörper
- 16: Längsmittelachse (Grundkörper)
- 18: Längsmittelachse (Welle)
- 20: Lagerbohrung
- 22: Lagerbohrungsinnenfläche
- 24: Radialspalt
- 26: Lagergehäuse

- 30: Lastzone
- 32: kleinflächige Längsvertiefung

- 40: externe Fluidversorgung
- 42: Fluid
- 44: untere Anlagefläche
- 46: Fluidkanal
- 48: Eintrittsöffnung
- 50: Umfangskontur

- 56: erster Ringsteg
- 58: zweiter Ringsteg
- 60: erstes axiales Ende
- 62: zweites axiales Ende

- 70: kleinflächige Längsvertiefung
- 72: kleinflächige Längsvertiefung

- F: Gleitlagerbelastung
- g: Erdbeschleunigung
- L: axiale Länge
- p: Druck
- R_{V}: Radialversatz

## Patentansprüche

1. Gleitlager (10), insbesondere zur Lagerung einer zylindrischen Welle (12), mit einem im Wesentlichen hohlzylindrischen Grundkörper (14) mit einer Längsmittelachse (16), wobei die Welle (12) radial spielbehaftet in einer Lagerbohrung (20) des Grundkörpers (14) aufgenommen ist, wobei
im Bereich einer Lastzone (30) der Lagerbohrung (20), in der die Welle (12) zumindest bereichsweise auf der Lagerbohrung (20) aufliegt, mindestens eine kleinflächige Längsvertiefung (32, 70, 72) angeordnet ist und die mindestens eine Längsvertiefung (32) mittels einer externen Fluidversorgung (40) mit einem unter einem Druck (p) stehenden Fluid (42) zur Verschleißminderung des Gleitlagers (10) beaufschlagt ist, wobei die mindestens eine Längsvertiefung (32, 70, 72) radial einwärts offen und eine langgestreckte und schmale sowie näherungsweise ovale Umfangskontur (50) aufweist, **dadurch gekennzeichnet, dass** ein Druck (p) des Fluids (42) im Bereich einer Eintrittsöffnung (48) der mindestens einen Längsvertiefung (32, 70, 72) mittels der Fluidversorgung (40) so eingestellt ist, dass eine auf die Gleitlager (10) einwirkende Gleitlagerbelastung (F)in Form einer Flächenlast im Bereich der Lastzone (30) im im Wesentlichen nicht-hydrodynamischen Zustand höchstens zu etwa 40% kompensiert ist.

2. Gleitlager (10) nach Patentanspruch 1, **dadurch gekennzeichnet, dass** die mindestens eine Längsvertiefung (32, 70, 72) mittels mindestens eines Fluidkanals (46) mit der Fluidversorgung (40) verbunden ist.

3. Gleitlager (10) nach Patentanspruch 1 oder 2, **dadurch gekennzeichnet, dass** zwischen der Längsmittelachse (16) des Grundkörpers (14) und einer Längsmittelachse (18) der Welle (12) ein Radialversatz (R_{V}) besteht.

4. Gleitlager (10) nach einem der vorhergehenden Patentansprüche, **dadurch gekennzeichnet, dass** der Grundkörper (14) mit einem Kunststoffmaterial und die Welle (12) mit einem metallischen Material gebildet ist.

5. Gleitlager (10) nach einem der vorhergehenden Patentansprüche, **dadurch gekennzeichnet, dass** das Fluid (42) ein flüssiges Medium mit einer geringen Viskosität, insbesondere Wasser, ist.

6. Gleitlager (10) nach einem der vorhergehenden Patentansprüche, **dadurch gekennzeichnet, dass** der Grundkörper (12) in einem Lagergehäuse (26) angeordnet ist, das insbesondere mit einem metallischen Material gebildet ist.

## Claims

1. Plain bearing (10), in particular for mounting a cylindrical shaft (12), with a substantially hollow-cylindrical main body (14) with a longitudinal centre axis (16), the shaft (12) being received with radial play in a bearing bore (20) of the main body (14), at least one small-area longitudinal depression (32, 70, 72) being arranged in the region of a load zone (30) of the bearing bore (20), in which load zone (30) the shaft (12) lies at least in regions on the bearing bore (20), and the at least one longitudinal depression (32) being loaded by means of an external fluid supply (40) with a fluid (42) which is at a pressure (p) in order to decrease the wear of the plain bearing (10), the at least one longitudinal depression (32, 70, 72) being open radially inwards and having an elongate, narrow and approximately oval circumferential contour (50), **characterized in that** a pressure (p) of the fluid (42) in the region of an inlet opening (48) of the at least one longitudinal depression (32, 70, 72) is set by means of the fluid supply (40) in such a way that a plain bearing load (F) which acts on the plain bearings (10) in the form of a distributed load is compensated for at most by approximately 40% in the region of the load zone (30) in the substantially non-hydrodynamic state.

2. Plain bearing (10) according to Patent Claim 1, **characterized in that** the at least one longitudinal depression (32, 70, 72) is connected to the fluid supply (40) by means of at least one fluid channel (46).

3. Plain bearing (10) according to Patent Claim 1 or 2, **characterized in that** there is a radial offset (R_{V}) between the longitudinal centre axis (16) of the main body (14) and a longitudinal centre axis (18) of the shaft (12).

4. Plain bearing (10) according to one of the preceding patent claims, **characterized in that** the main body (14) is formed with a plastic material and the shaft (12) is formed with a metallic material.

5. Plain bearing (10) according to one of the preceding patent claims, **characterized in that** the fluid (42) is a liquid medium with a low viscosity, in particular water.

6. Plain bearing (10) according to one of the preceding patent claims, **characterized in that** the main body (12) is arranged in a bearing housing (26) which is formed, in particular, with a metallic material.

## Revendications

1. Palier lisse (10), notamment pour le montage d'un arbre cylindrique (12), comprenant un corps de base (14) essentiellement cylindrique creux avec un axe médian longitudinal (16), l'arbre (12) étant reçu avec un jeu radial dans un alésage de palier (20) du corps de base (14),
au moins un creux longitudinal (32, 70, 72) de petite surface étant agencé dans la région d'une zone de charge (30) de l'alésage de palier (20), dans laquelle l'arbre (12) repose au moins par régions sur l'alésage de palier (20), et l'au moins un creux longitudinal (32) étant sollicité, au moyen d'une alimentation en fluide externe (40), avec un fluide (42) se trouvant sous une pression (p) pour réduire l'usure du palier lisse (10), l'au moins un creux longitudinal (32, 70, 72) étant ouvert radialement vers l'intérieur et présentant un contour périphérique (50) allongé et étroit ainsi qu'approximativement ovale, **caractérisé en ce qu'**une pression (p) du fluide (42) dans la région d'une ouverture d'entrée (48) de l'au moins un creux longitudinal (32, 70, 72) est ajustée au moyen de l'alimentation en fluide (40) de telle sorte qu'une charge de palier lisse (F) agissant sur les paliers lisses (10) sous la forme d'une charge surfacique dans la région de la zone de charge (30) à l'état essentiellement non hydrodynamique est compensée au plus à environ 40 %.

2. Palier lisse (10) selon la revendication 1, **caractérisé en ce que** l'au moins un creux longitudinal (32, 70, 72) est relié à l'alimentation en fluide (40) au moyen d'au moins un canal de fluide (46).

3. Palier lisse (10) selon la revendication 1 ou 2, **caractérisé en ce qu'**un décalage radial (Rᵥ) existe entre l'axe médian longitudinal (16) du corps de base (14) et un axe médian longitudinal (18) de l'arbre (12).

4. Palier lisse (10) selon l'une quelconque des revendications précédentes, **caractérisé en ce que** le corps de base (14) est formé avec un matériau plastique et l'arbre (12) avec un matériau métallique.

5. Palier lisse (10) selon l'une quelconque des revendications précédentes, **caractérisé en ce que** le fluide (42) est un milieu liquide ayant une faible viscosité, notamment de l'eau.

6. Palier lisse (10) selon l'une quelconque des revendications précédentes, **caractérisé en ce que** le corps de base (12) est agencé dans un logement de palier (26), qui est formé notamment avec un matériau métallique.
